# EUROPEAN PATENT APPLICATION

(11) **EP 2 837 526 A1**
(43) Date of publication of application: **18.02.2015**
(21) Application number: 14180677.8
(22) Date of filing: 12.08.2014
(51) Int. Cl.: B60N 2/005, B60N 2/015, B60N 2/08, B64D 11/06

(54) **Adaptable vehicle seat fitting**

(30) Priority: 12.08.2013 GB 201314388
(71) Applicant: NMI Safety Systems Ltd., London N17 0YX (GB)
(72) Inventor: Sawdy, Michael, Hertford, Hertfordshire SG13 8DU (GB)
(74) Representative: Beattie, Alex Thomas Stewart

(57) **Abstract**

A seat support (20) for use with a vehicle seat and adapted to engage a track (1) provided on the floor of a vehicle, the track comprising two inwardly-directed lips (7, 8) on opposed sides of a slot (5), the lips providing first alternating protrusions (9) and recesses (10) along the length of the track, the protrusions (9) being spaced apart by a spacing distance, the first protrusions (9) defining shoulder surfaces (11) on each side thereof, and the track defining a bearing surface (12) formed on the inner face of the or each first protrusion (9), the seat support including an interface portion (21) which has a profile comprising second alternating protrusions (23) and recesses (24), the second protrusions (23) being spaced apart by the same spacing distance, and a retaining mechanism to engage with the track (1) and secure the support (20) in the desired position, wherein the retaining mechanism includes a first securing member (25) and a second securing member (26) which is moveable with respect to the seat support (20), the seat support being configured such that the second protrusions (23) may be aligned with the first recesses (10) so that the interface portion may be placed within the slot (5) in an engagement position, the seat support being moveable with respect to the slot, from the engagement position into a locking position in which the first (9) and second (23) protrusions are substantially aligned, preventing the interface portion (21) from being removed from the slot (5), and in the locking position, the first securing member (25) is engaged with a first pair of shoulders (11) on the track and the second securing member (26) may be engaged with a second pair of shoulders (11) on the track, thereby preventing movement of the seat support (20) with respect to the track (1).

## Description

### Description of Invention

THE PRESENT INVENTION relates to a seat support, and more specifically relates to a seat support suitable for use in a vehicle such as a motor vehicle.

It has been proposed previously to provide seats in a motor vehicle that are mounted in position on rails, or which are adapted to engage a track on the floor of a vehicle and lockable in place by way of a pair of spaced apart plates which may be moved apart to bias the plates in a locking position, as set out in EP1034969.

However, previously proposed seat mounting systems are relatively complex and require adjustments to be usable in different vehicle types, and are not always capable of being 'universal'.

The present invention seeks to provide an improved, more simple, universal seat support, that may be used in many different vehicles without substantial modification to the seat support or vehicle.

Accordingly, the present invention provides a seat support for use with a vehicle seat and adapted to engage a track provided on the floor of a vehicle, the track comprising two inwardly-directed lips on opposed sides of a slot, the lips providing first alternating protrusions and recesses along the length of the track, the protrusions being spaced apart by a spacing distance, the first and second protrusions defining shoulder surfaces on each side thereof, and the track defining a bearing surface formed on the inner face of the or each first protrusion, the seat support including an interface portion which has a profile comprising second alternating protrusions and recesses, the protrusions being spaced apart by the same spacing distance, and a retaining mechanism to engage with the track and secure the support in the desired position, wherein the retaining mechanism includes a first securing member and a second securing member which is moveable with respect to the seat support, the seat support being configured such that the second protrusions may be aligned with the first recesses so that the interface portion may be placed within the slot in an engagement position, the seat support being moveable with respect to the slot, from the engagement position into a locking position in which the first and second protrusions are substantially aligned, preventing the interface portion from being removed from the slot, and in the locking position, the first securing member is engaged with a first pair of shoulders on the track and the second securing member may be engaged with a second pair of shoulders on the track, thereby preventing movement of the seat support with respect to the track.

Preferably, the first protrusions have a rounded profile.

Conveniently, the second protrusions have a rounded profile.

Alternatively, the first protrusions have a square profile.

Alternatively, the second protrusions have a square profile.

Alternatively, the first protrusions have an angled profile.

Alternatively, the second protrusions have an angled profile.

**Advantageously,** the first retaining mechanism takes the form of a hook.

Preferably, the first retaining mechanism includes a planar surface against which the first pair of shoulders may bear.

Conveniently, the second retaining mechanism is pivotable with respect to the seat support.

Advantageously, the second retaining mechanism is slidable with respect to the seat support.

Preferably, the second retaining mechanism includes a planar surface against which the second pair of shoulders may bear.

Conveniently, the second retaining mechanism may be locked in place by way of a third locking mechanism.

Advantageously, the third locking mechanism is a drop lock.

Alternatively, the third locking mechanism is a spring or detent lock.

Preferably, when the seat support is in the first position, the first retaining mechanism is positioned such that when the second protrusions on the interface portion are aligned with the first recesses on the track, the first retaining mechanism is aligned with a first recess.

Alternatively, when the seat support is in the first position, the first retaining mechanism is positioned such that when the second protrusions on the interface portion are aligned with the protrusions on the track, the first retaining mechanism is aligned with a set of shoulders of the track.

Conveniently, when the seat support is in the locking position, the second protrusions bear against the bearing surface.

Alternatively, when the seat support is in the locking position, the second protrusions do not bear against the bearing surface.

Advantageously, the seat support defines a plane substantially parallel with and above the second protrusions, the first protrusions lying in or near the plane when the seat support is in the engagement position and the locking position, and when the second locking member is in the first position, it does not pass through the plane, and when the second locking member is in the second position, it does pass through the plane.

Preferably, the first locking mechanism is fixed with respect to the seat support.

Conveniently, the first locking mechanism passes through the plane in both the engagement position and the locking position.

Alternatively, the first locking mechanism is moveable with respect to the seat support between a first position and a second position.

Advantageously, the seat support defines a plane substantially parallel with and above the second protrusions, the first protrusions lying in or near the plane when the seat support is in the engagement position and the locking position, and when the first locking member is in the first position, it does not pass through the plane, and when the first locking member is in the second position, it does pass through the plane.

Preferably, when the seat support is in the locking position, the first and second recesses overlap.

Alternatively, when the seat support is in the locking position, the first and second recesses are generally aligned.

A second aspect of the present invention provides seat support in combination with a track which comprises two inwardly-directed lips on opposed sides of a slot, the lips providing first alternating protrusions and recesses along the length of the track, the protrusions being spaced apart by a spacing distance, the first and second protrusions defining shoulder surfaces on each side thereof, and the track defining a bearing surface formed on the inner face of the or each first protrusion.

A further aspect of the invention provides a seat including a seat support.

In order that the invention may be more readily understood, the invention will now be described, by way of example, with reference to the accompanying drawings in which:
FIGURE 1 is a perspective view of a track adapted to be mounted in a motor vehicle;
FIGURE 2 is a side view of a seat support in accordance with the invention in a first condition;
FIGURE 3 is a side view of a seat support in accordance with the invention in a second condition;
FIGURE 4 is a view of part of a seat support in accordance with the present invention;

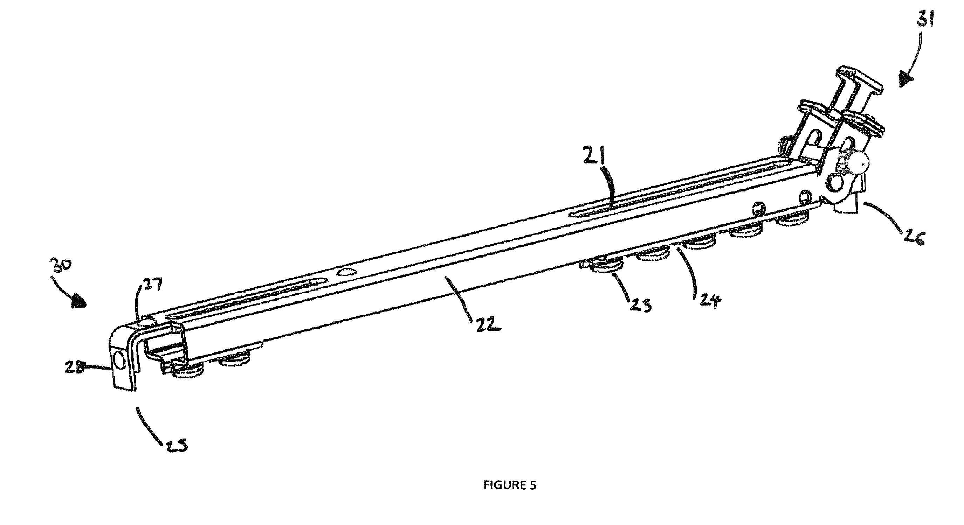

FIGURE 5 is a perspective view of a seat support in accordance with the present invention;

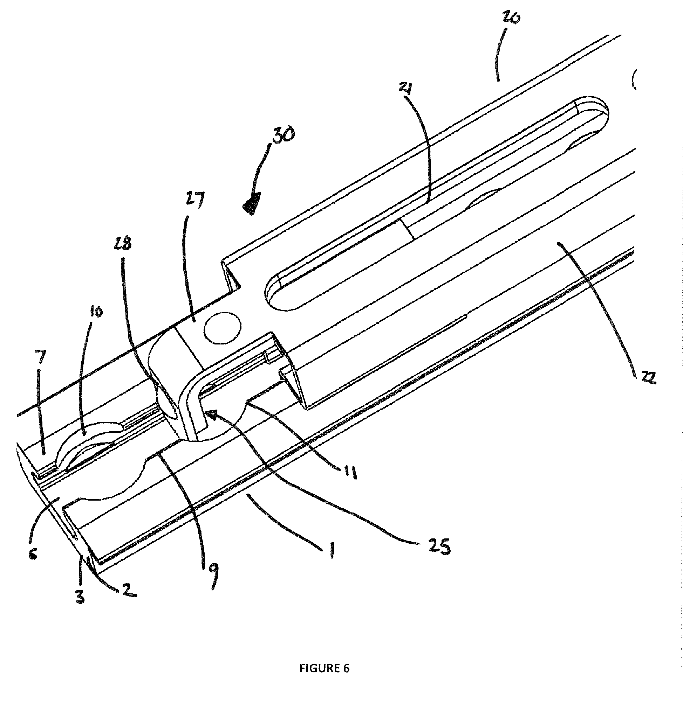

FIGURE 6 is a view of the front end of a seat support in accordance with the present invention in the engagement position;

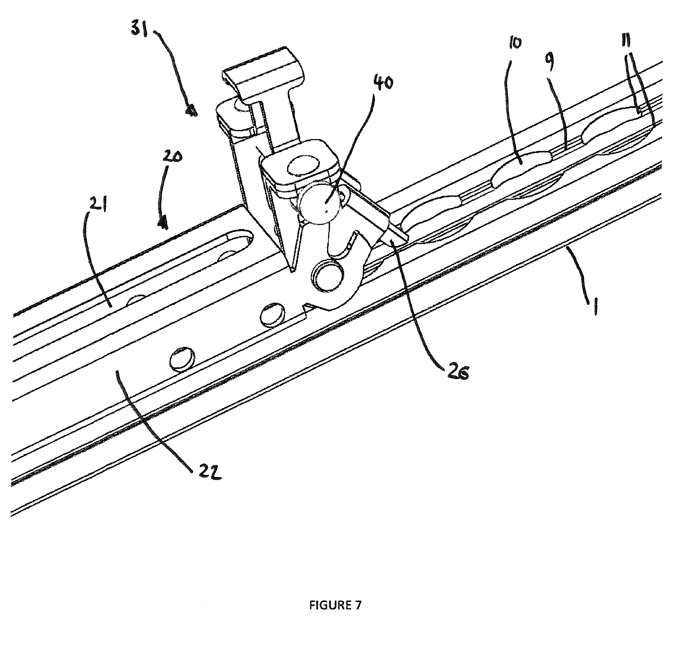

FIGURE 7 is a view of the rear end of a seat support in accordance with the present invention in the engagement position.

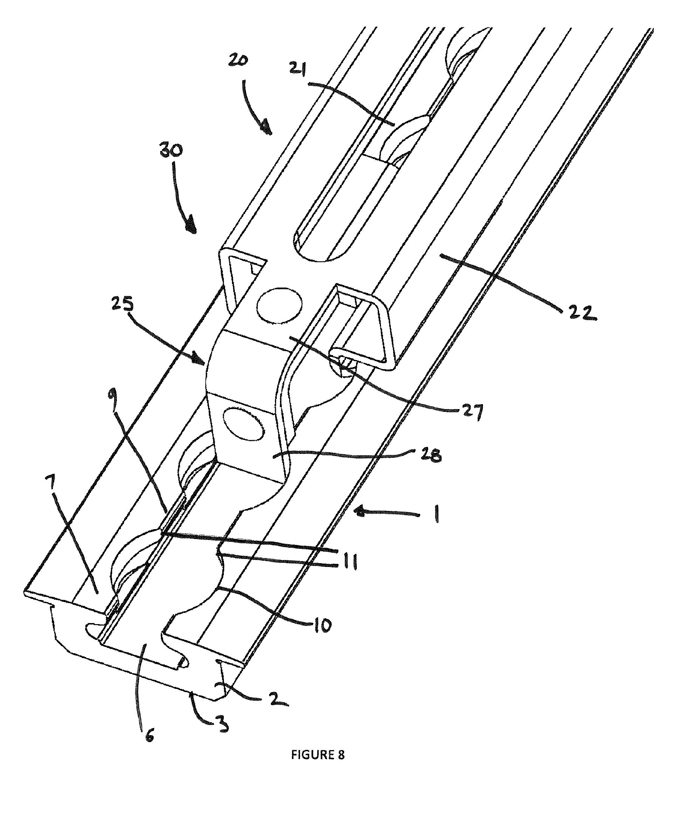

FIGURE 8 is a view of the front end of a seat support in accordance with the present invention in the locking position; and

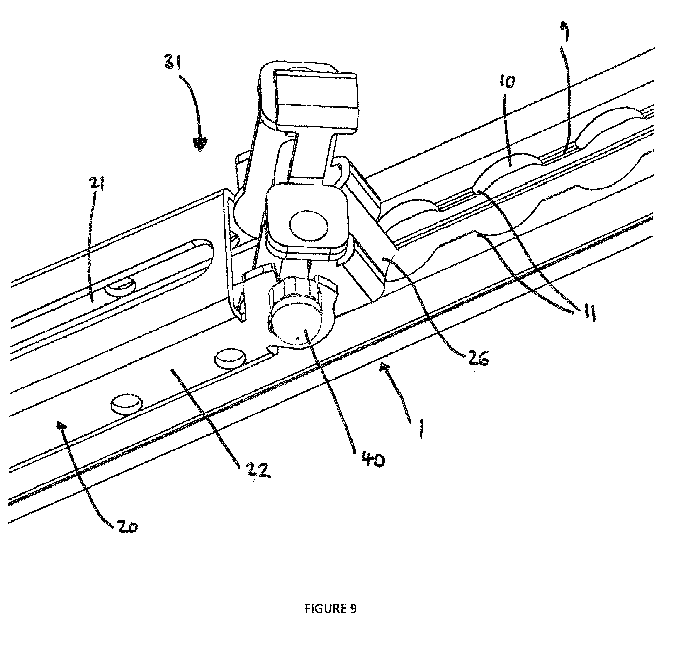

FIGURE 9 is a view of the rear end of a seat support in accordance with the present invention in the locking position.

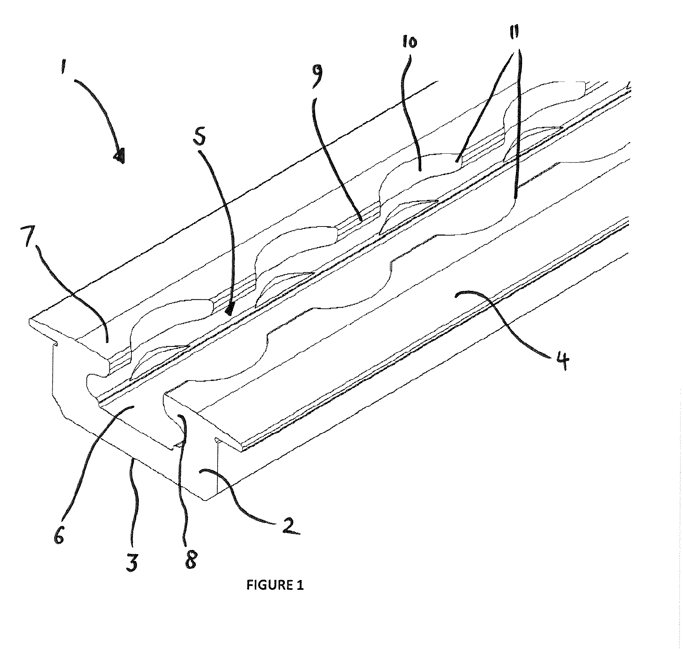

Referring initially to Figure 1, a track 1 adapted to be mounted in the floor of a motor vehicle is shown, which preferably comprises an extrusion 2 of an appropriate material. The track 1 defines a planar under surface 3 adapted to be secured to the floor of a vehicle and an upper surface 4 which may be substantially flush with the surface of the vehicle. A central slot 5 is provided in the track 1 which communicates with an under-cut channel 6. The track 1 thus prevents two inwardly directed lips 7, 8 on either side of the slot 5.

Each of the inwardly directed lips 7, 8 includes a series of first alternating protrusions 9 and recesses 10 along the length of the track. These protrusions 9 and recesses 10 may have a rounded profile, as shown in Figure 1, or may have a more square or angular profile, depending upon the application or vehicle being used. The protrusions 9 and recesses 10 on the two lips 7, 8 are substantially aligned with each other.

The first protrusions 9 define shoulder surfaces 11 on each side thereof, and the profile of the shoulder surfaces 11 will depend upon the profile of the protrusions 9 and recesses 10.

Additionally, the underside of each of the first protrusions 9 may provide a bearing surface on 12 its inner face. The bearing surface 12 may extend to the entire surface of the undersides of each of the lips 7, 8. The area of the bearing surface 12 will depend upon the application, vehicle or track 1 being used.

This type of track has become widely used in vehicles, particularly in passenger vehicles such as coaches or buses.

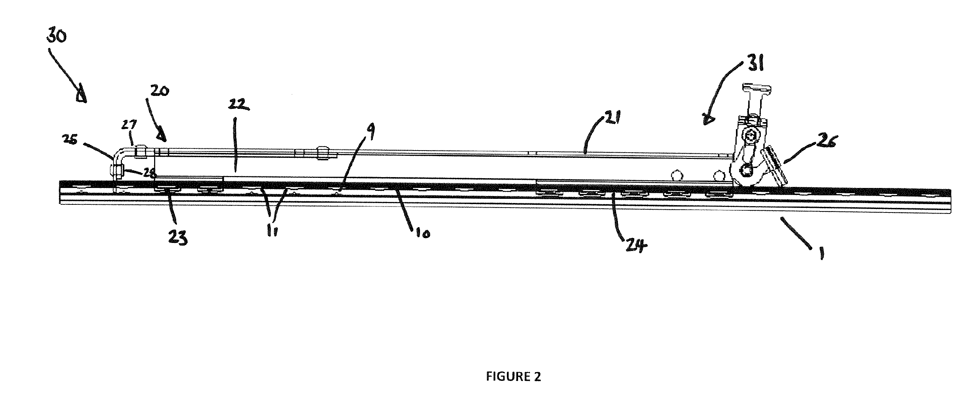

A seat support 20 is shown in Figure 2. The seat support 20 comprises an interface portion 21 and a mounting portion 22 and is generally elongate, having a front end 30 and a rear end 31.

The interface portion 21 includes second alternating protrusions 23 and recesses 24 along its length. These protrusions 23 and recesses 24 may have a rounded profile, as shown in Figure 1, or may have a more square or angular profile, depending upon the application, vehicle or track 1 being used. It is envisaged that the second protrusions 23 and recesses 24 will have a profile which is generally complementary to the profile of the first protrusions 9 and recesses 10 which are formed in the lips 7, 8 of the track 1 with which the seat support 20 is to be used.

The seat support 20 also includes two locking portions, a first locking portion 25 and a second locking portion 26.

It is envisaged that the first locking portion 25 may be fixed with respect to the seat support 20, or may be formed as part of the seat support 20, dependent upon the intended application and size of the seat support 20. In Figure 2, the first locking portion 25 is formed as part of the seat support 20, and is provided at the front end 30 of the seat support 20. The first locking portion 25 includes an elongate part 27 and a bearing part 28. The bearing part 28 may be shaped such that it fits against, or takes the profile of, the shoulders 11.

The second locking portion 26 is provided at the rear end 31 of the seat support 20 and is moveable with respect to the seat support 20. It is intended that the second locking portion 26, as shown in Figure 2, is pivotable with respect to the seat support 20. However, the second locking mechanism 26 could be slidable with respect to the seat support 20, or may take any suitable form dependent upon the application, vehicle or track 1 being used.

The second locking portion 26 shown in Figure 2 preferably has a shape which is complementary to the shape of the protrusions 9 and recesses 10 formed in the track, and is therefore complementary to the shape of the shoulders 11 formed in the track 1.

To ensure good contact between the second locking portion 26 and the shoulders 11, it is preferred that the shapes of both are complementary or at least configured such that there is a substantial surface area of the shoulders 11 against which the second locking portion 26 may bear.

The second locking portion 26, moveable with respect to the seat support 20, may be moved between a first position and a second position. The significance of these two positions will be discussed in more detail later.

Operation of the seat support 20 will now be described.

As can be seen in Figure 2, the seat support 20 may be placed in the track 1 such that the first protrusions 9 of the track 1 are aligned with the second recesses 24 of the seat support 20, and vice versa. In this engagement position, the bearing part 28 of the first locking portion 25 may be placed within a first recess 10, or may be located at or near a pair of shoulders 11. The seat support 20 may be placed in, or removed from the track 1 freely when the first and second recesses and protrusions 9, 10, 23, 24 are aligned in this way.

The second locking portion 26 may be in the first position when the seat support 20 is in the engagement position, such that the second locking portion 26 substantially does not make contact with any portion of the track 1.

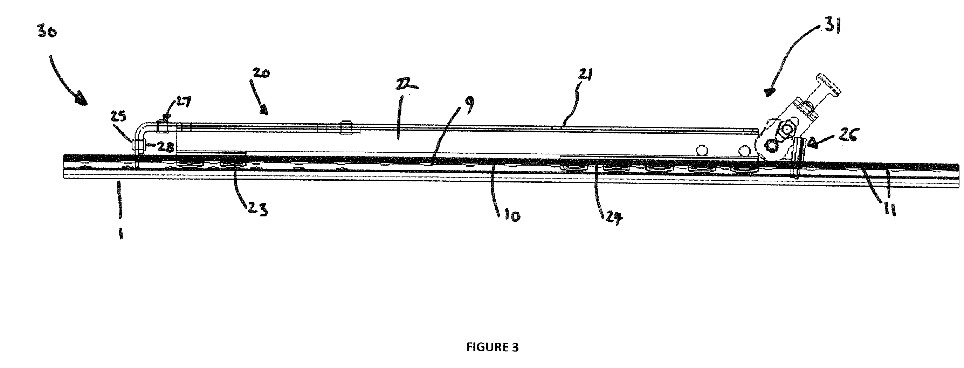

When the seat support 20 is in the engagement position, the seat support 20 may be substantially freely lifted from the track 1. Additionally, the seat support 20 may be slid with respect to the track 1, along the axis of the slot of the track 1, with the second protrusions 23 passing under the first protrusions 9. This configuration is shown in Figure 3.

As discussed above, the bearing part 28 of the first locking portion 25 may be positioned at or near a pair of shoulders 11 to ensure that the seat support 20 may be slid in only one direction with respect to the track 1. One face of the bearing part 28 may bear, in the engagement position, against a pair of shoulders 11 which face towards the seat support 20. When the seat support 20 is slid with respect to the track 1 in a direction passing from the front end 30 to the rear end 31, the other face of the bearing part 28 may come into contact with and bear a further pair of shoulders 11, facing away from the seat support 20.

When the bearing part 28 comes into contact with these shoulders 11, the seat support 20 is in the locking position, and may not be slid any further with respect to the track 1. In the locking position, the second locking portion 26 may be moved from the first position to the second position, and in the second position, the second locking portion 26 may bear against a third pair of shoulders 11, facing away from the seat support 20 and may, if the second locking portion 26 is shaped appropriately, grip or pass around the third shoulders 11.

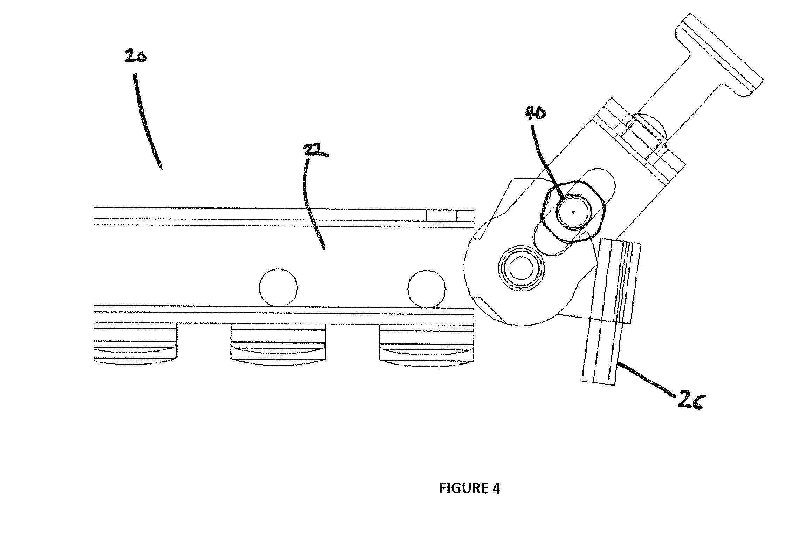

To prevent the second locking portion 26 from being moved from the second position to the first position when the seat support 20 is in the locking position, a third locking portion 40, shown in Figure 4, may be employed. The third locking portion 40 may be configured, when the second locking mechanism 26 is moved into the second position, to substantially prevent the second locking mechanism 26 being moved back into the first position.

This third locking portion 40 is therefore useful to prevent the accidental release of the seat support 20 from the locked position to the engagement position. The third locking portion 40, as shown in Figure 4, may be a drop lock, which must be released prior to moving the second locking portion 26 from the second position to the first position. It is, however, to be understood that the third locking portion 40 may take any suitable form dependent upon the intended application and may, for instance, be a spring lock or a detent lock.

In the locking position, when the bearing part 28 of the first locking portion 25 bears against the further pair of shoulders 11 and when the second locking portion 26 is moved into the second position and therefore bears against the third pair of shoulders 11, the seat support 20 may not be lifted from the track 1.

Additionally, the seat support 20 may not be slid with respect to the track 1, along the axis of the slot of the track 1. This is because the first and second locking portions respectively bear against shoulders which face away from the seat support 20. The seat support 20 is therefore locked longitudinally in place between these shoulders 11.

The seat support 20 may not be lifted from the track because, in the locking position, the first protrusions 9 are at least partially aligned with the second protrusions 23, so that these protrusions 9, 23 at least overlap with each other. In some configurations, the upper surface of the second protrusions 23 may bear against the bearing surface 12 formed on the underside of the first protrusions 9, although, as mentioned above, the second protrusions 23 may not bear against the bearing surface 12 in some configurations.

Alternatively, the first and second locking members may have a shape which, when both locking members are in contact with the shoulders 11, may prevent the seat support 20 being lifted out of the track 1.

The seat support 20 and the first locking portion 25 may be dimensioned such that when the seat support 20 is placed in the track 1 and the first protrusions 9 are accommodated by the second recesses 24, the bearing part 28 of the first locking portion 25 may bear against a pair of shoulders 11 as set out above.

Therefore, when the seat support 20 is moved with respect to the track 1, the bearing part 28 may bear against a second pair of shoulders 11, again as set out above. Due to this, it may be ensured that when the seat support 20 is moved into the locking position, the first protrusions 9 and the second protrusions 23 are aligned to provide strong securement of the seat support 20 within the track 1.

It is also to be understood that the support mechanism 10 may be formed as part of a vehicle seat, or may alternatively be formed separately and attached to a vehicle seat.

In use, the seat support 20 may be placed in the track 1 (the seat support 20 in the engagement position), and slid with respect to the track until the bearing part 28 of the first locking portion 25 makes contact with a pair of shoulders 11, such that the seat support 20 is in the locking position.

At this point, the second locking portion 26 would be moved from the first position to the second position, such that it bears against the third pair of shoulders 11 formed by the first protrusions 9.

When the second locking portion 26 is moved into the second position, the third locking portion 40 may then move or be moved into position, preventing the second locking portion 26 from being moved with respect to the seat support 20.

At this point, the seat support 20 is secured within the track 1. To remove the seat support 20 from the track 1, the user must disengage the third locking portion 40 and move the second locking portion 26 back into the first position, move the seat support 20 back into the engagement position and remove the seat support 20 from the track 1.

The first locking portion 25 described above is fixed in place with respect to the seat support 20. However, it may be moveable in a similar fashion to the second locking portion 26 described above. Thus, unlocking both allows the seat support 20 to be slid rapidly along the track 1 to move a seat a large distance without having to remove the seat from the track 1 or to lift the seat.

If large upward forces or forces which would tend to cause a seat attached to the seat support 20 to pitch or roll with respect to the vehicle floor were experienced by the seat fitting 20, the seat fitting 20 (when in the locking position, by way of its engagement with the track 1 and therefore the vehicle floor) would prevent movement of the seat with respect to the vehicle floor.

Therefore, the seat fitting 20 according to the present invention is a cost effective solution which includes few moving parts, and is easy to operate, simple, safe and lightweight.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A seat support for use with a vehicle seat and adapted to engage a track provided on the floor of a vehicle, the track comprising two inwardly-directed lips on opposed sides of a slot, the lips providing first alternating protrusions and recesses along the length of the track, the protrusions being spaced apart by a spacing distance, the first and second protrusions defining shoulder surfaces on each side thereof, and the track defining a bearing surface formed on the inner face of the or each first protrusion,
the seat support including:
an interface portion which has a profile comprising second alternating protrusions and recesses, the protrusions being spaced apart by the same spacing distance, and
a retaining mechanism to engage with the track and secure the support in the desired position,
wherein the retaining mechanism includes a first securing member and a second securing member which is moveable with respect to the seat support,
the seat support being configured such that the second protrusions may be aligned with the first recesses so that the interface portion may be placed within the slot in an engagement position, the seat support being moveable with respect to the slot, from the engagement position into a locking position in which the first and second protrusions are substantially aligned, preventing the interface portion from being removed from the slot, and
in the locking position, the first securing member is engaged with a first pair of shoulders on the track and the second securing member may be engaged with a second pair of shoulders on the track, thereby preventing movement of the seat support with respect to the track.

2. The seat support of claim 1, wherein the first and/or second protrusions have a rounded, square or angled profile.

3. The seat support of claim 1 or 2 wherein the first retaining mechanism takes the form of a hook, or wherein the first retaining mechanism includes a planar surface against which the first pair of shoulders may bear.

4. The seat support of any previous claim wherein the second retaining mechanism is pivotable or slidable with respect to the seat support.

5. The seat support of claim 4 wherein the second retaining mechanism includes a planar surface against which the second pair of shoulders may bear.

6. The seat support of claim 4 or 5 wherein the second retaining mechanism may be locked in place by way of a third locking mechanism, and preferably wherein the third locking mechanism is a drop lock, or a spring or detent lock.

7. The seat support of any preceding claim wherein when the seat support is in the first position, the first retaining mechanism is positioned such that when the second protrusions on the interface portion are aligned with the first recesses on the track, the first retaining mechanism is aligned with a first recess, or wherein when the seat support is in the first position, the first retaining mechanism is positioned such that when the second protrusions on the interface portion are aligned with the protrusions on the track, the first retaining mechanism is aligned with a set of shoulders of the track.

8. The seat support of any preceding claim, wherein when the seat support is in the locking position, the second protrusions bear against the bearing surface, or wherein when the seat support is in the locking position, the second protrusions do not bear against the bearing surface, or wherein the seat support defines a plane substantially parallel with and above the second protrusions, the first protrusions lying in or near the plane when the seat support is in the engagement position and the locking position, and
when the second locking member is in the first position, it does not pass through the plane, and
when the second locking member is in the second position, it does pass through the plane.

9. The seat support of any preceding claim wherein the first locking mechanism is fixed with respect to the seat support, and preferably wherein the first locking mechanism passes through the plane in both the engagement position and the locking position.

10. The seat support of any one of claims 1 to 8 wherein the first locking mechanism is moveable with respect to the seat support between a first position and a second position.

11. The seat support of claim 10 wherein the seat support defines a plane substantially parallel with and above the second protrusions, the first protrusions lying in or near the plane when the seat support is in the engagement position and the locking position, and
when the first locking member is in the first position, it does not pass through the plane, and
when the first locking member is in the second position, it does pass through the plane.

12. The seat support of any preceding claim wherein when the seat support is in the locking position, the first and second recesses overlap.

13. The seat support of claim 9 wherein when the seat support is in the locking position, the first and second recesses are generally aligned.

14. A seat support according to any previous claim in combination with a track which comprises:
two inwardly-directed lips on opposed sides of a slot, the lips providing first alternating protrusions and recesses along the length of the track, the protrusions being spaced apart by a spacing distance, the first and second protrusions defining shoulder surfaces on each side thereof, and the track defining a bearing surface formed on the inner face of the or each first protrusion.

15. A seat including a seat support in accordance with any previous claim.
